# EUROPEAN PATENT SPECIFICATION

(11) **EP 4 262 490 B1**
(45) Date of publication and mention of the grant of the patent: **17.12.2025**
(21) Application number: 22702471.8
(22) Date of filing: 31.01.2022
(51) Int. Cl.: A47J 31/44

(54) **MILK FROTHER WITH IMPROVED ACCESS TO INNER PARTS THEREOF FOR CLEANING**
MILCHSCHÄUMER MIT VERBESSERTEM ZUGANG ZU SEINEN INNENTEILEN ZUR REINIGUNG
MOUSSEUR À LAIT FACILITANT L'ACCÈS À DES PARTIES INTERNES DE CE DERNIER À DES FINS DE NETTOYAGE

(30) Priority: 11.02.2021 IT 202100003017
(43) Date of publication of application: 25.10.2023
(73) Proprietor: De'Longhi Appliances S.r.l., 31100 Treviso (IT)
(72) Inventor: MARCON, Davide, 31100 Treviso (IT); SARTORI, Eros, 31100 Treviso (IT); PANCIERA, Antonio, 31100 Treviso (IT); TREVISAN, Gianpaolo, 31100 Treviso (IT); ROSETTA, Simone, 31100 Treviso (IT)
(74) Representative: Rapisardi, Mariacristina
(86) International application number: PCT/EP2022/052177
(87) International publication number: WO 2022/171470

(56) References cited:
- EP-A1- 0 555 766
- EP-A1- 2 471 423
- WO-A1-2021/009032
- DE-T2- 68 908 275
- US-A- 5 738 002
- US-A1- 2011 297 007

## Description

The present invention relates to a milk frother that is associable with a steam dispenser, particularly but not necessarily with a coffee machine.

Different types of milk frothers are known that are integrated or not into a coffee machine that comprise a mixing chamber, a steam inlet path, a Venturi-effect air suction path, a Venturi-effect milk suction path and an outlet path of the milk emulsified with steam and/or air.

Generally, in milk frothers of known type, the Venturi-effect milk suction path comprises a milk suction tube for sucking milk from a container that is always in fluid communication with the mixing chamber.

Usually, the milk frothers known from the prior art consist of a plurality of components that are assembled together for sale and are not removable or separable after purchase.

In a milk emulsifying cycle, the milk is sucked from a container and mixed with air and with steam at a high temperature to form the characteristic foam or can be mixed only with high temperature steam to be heated and is then dispensed to the same container from which it was taken.

In milk frothers of known type, after use, some drops of milk, or milk residues, may remain trapped inside the mixing chamber and in the milk suction path, for example in the part of the suction path proximal to the mixing chamber or in the suction tube in direct contact with the milk to be mixed.

Disadvantageously, these milk residues generate incrustations and fertile environments for the potential development of bacteria.

This entails a possible deterioration of the organoleptic properties of a subsequent mixing cycle of fresh milk and resulting dissatisfaction of the customer who purchased the product. According to a further aspect, in milk frothers of known type, the milk suction path in the mixing chamber usually comprises a milk suction tube with the sole function of sucking up the milk from the bottom of a container placed near the coffee machine.

In the prior art, complex solutions are known for cleaning milk frothers that provide suction cycles of only water or a water-detergent solution and emission cycles of only steam following each use.

Milk frothing devices are for example known from documents US 5,738,002 A, EP 2471423 A1, DE 68908275 T2 and WO 2021/009032 A1.

One object of the present invention is to make a milk frother that is associable with a coffee machine that solves the aforesaid problems of the prior art, in particular that prevents the accumulation of milk residues inside the components of the milk frother after use.

A further object of the present invention is to provide a milk frother that permits the milk frother to be washed easily and intuitively.

The technical task, as well as these and other objects according to the present invention, are attained by creating a milk frother according to appended claim 1.

Advantageously, the inner parts of the milk frother are easily inspectable and cleanable, also in dishwashers, simply by taking the milk frother to the first and second disengagement configuration.

The fact that although the configuration can be changed, there is a permanent connection between the components of the milk frother, further facilitates the inspection and cleaning operations, preventing some parts thereof possibly getting damaged or others getting lost. Further characteristics and advantages of the invention will more fully emerge from the description of a preferred but not exclusive embodiment of the milk frother according to the invention, illustrated by way of non-limiting example in the appended drawings, wherein:

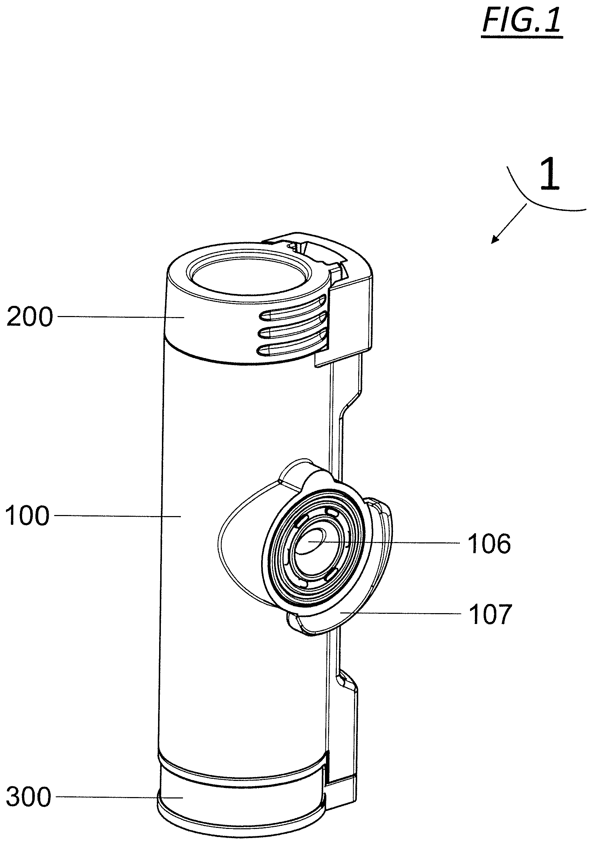

- figure 1 shows a perspective view of the milk frother in the engagement configuration;

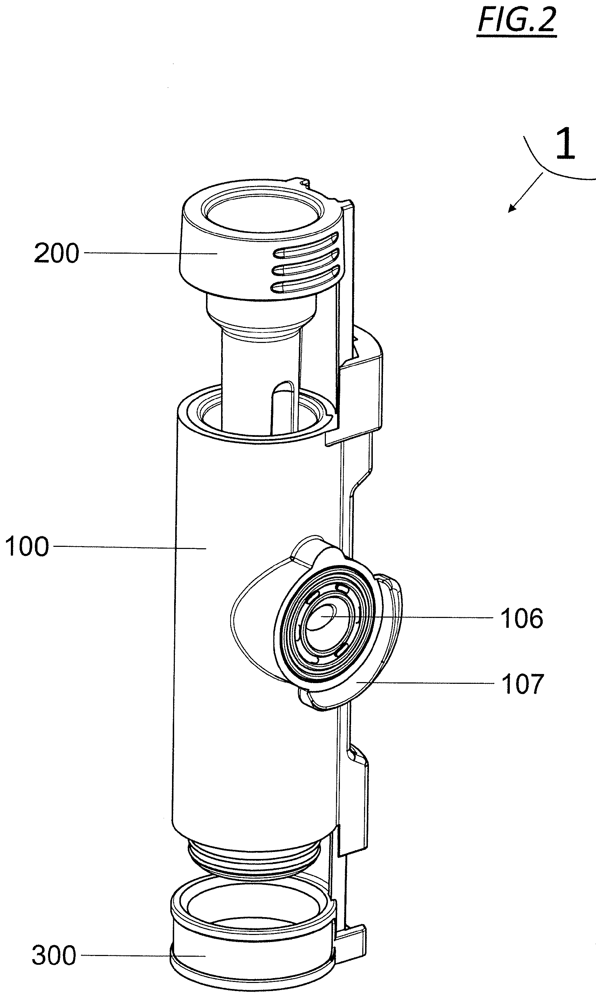

- figure 2 shows a perspective view of the milk frother in the disengagement configuration;

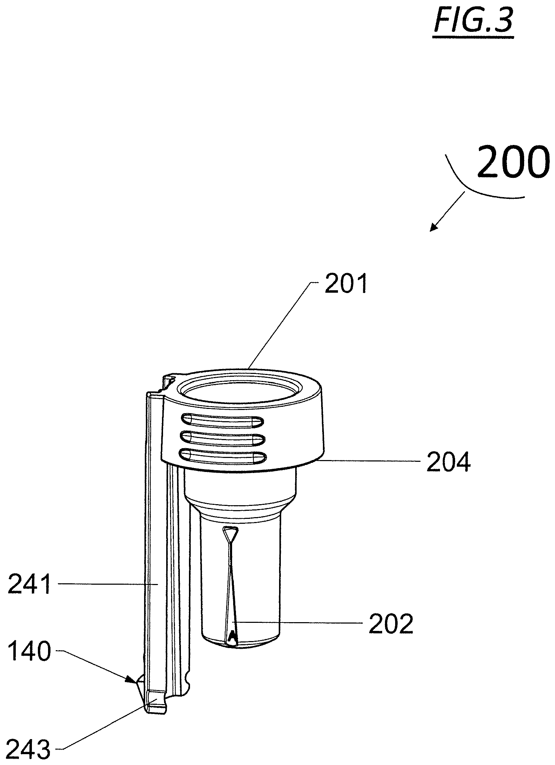

- figure 3 shows a perspective view of the steam fitting;

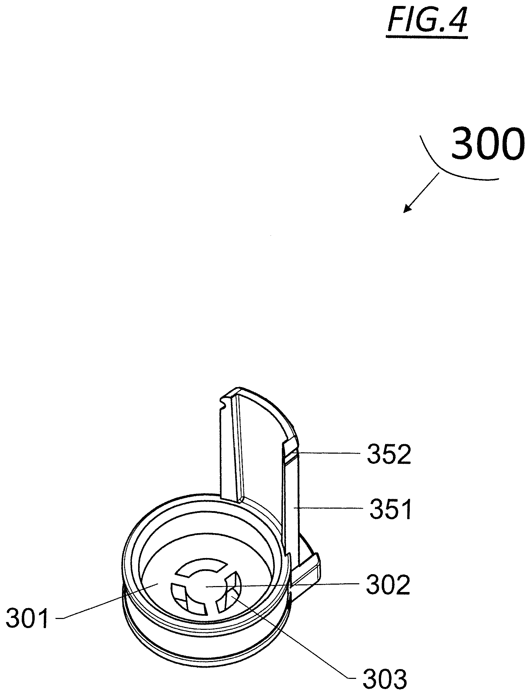

- figure 4 shows a perspective view of the homogenization element;

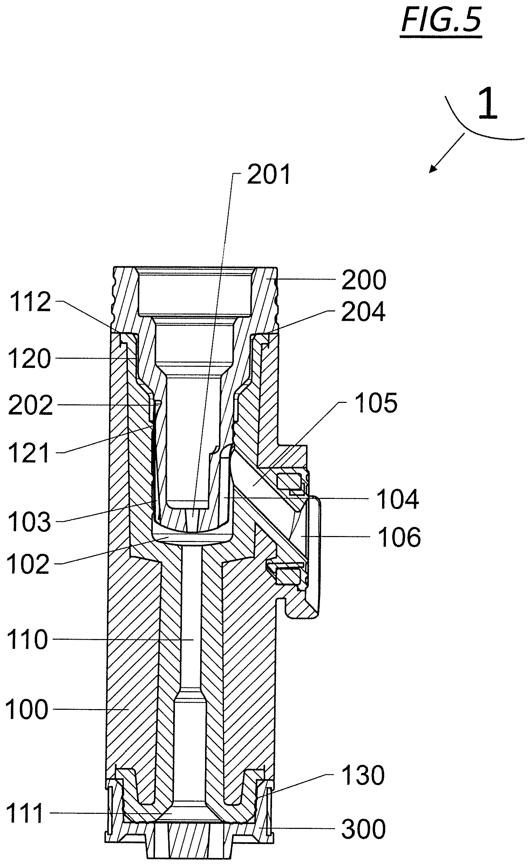

- figure 5 shows a vertical section of the milk frother in the engagement configuration;

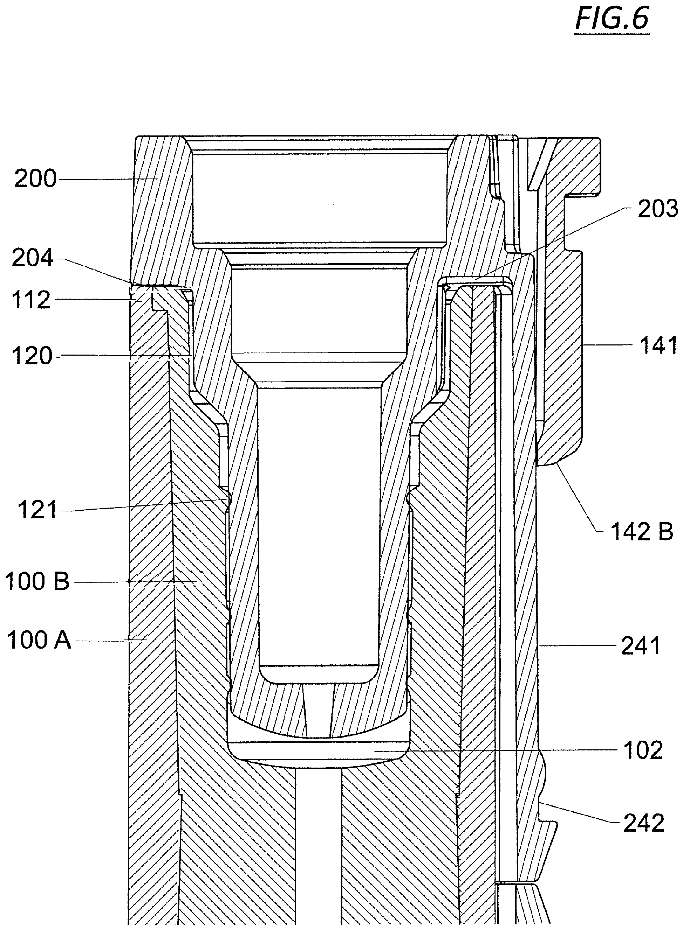

- figure 6 shows a vertical section view of the upper end of the milk frother in the engagement configuration;

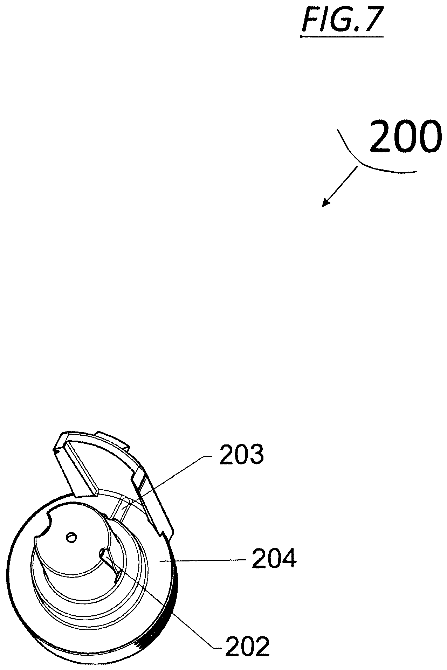

- figure 7 shows a perspective view from below of the steam fitting;

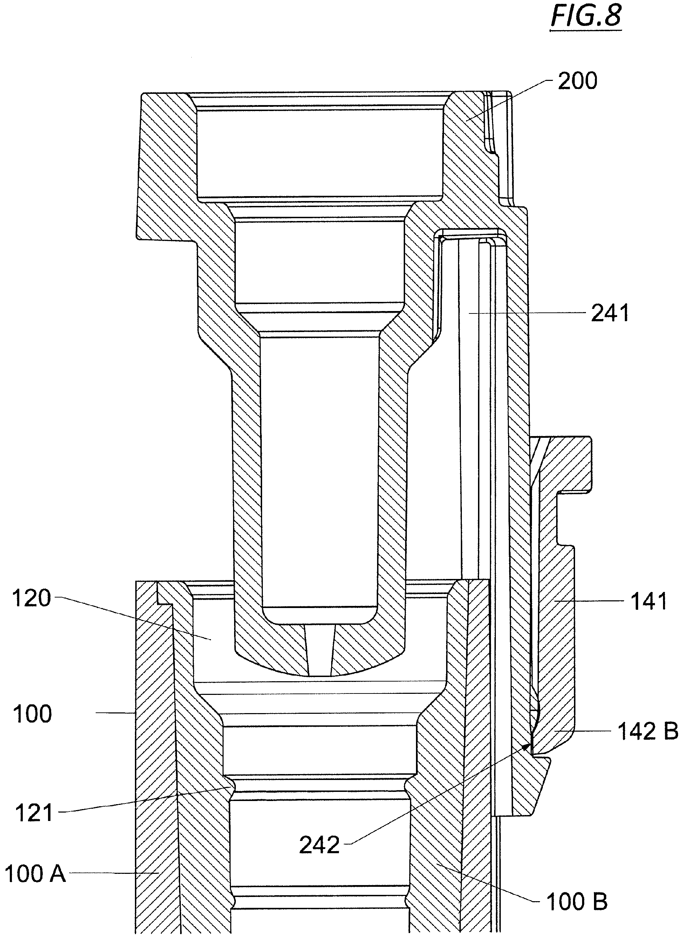

- figure 8 shows a vertical section view of the upper end of the milk frother in the disengagement configuration;

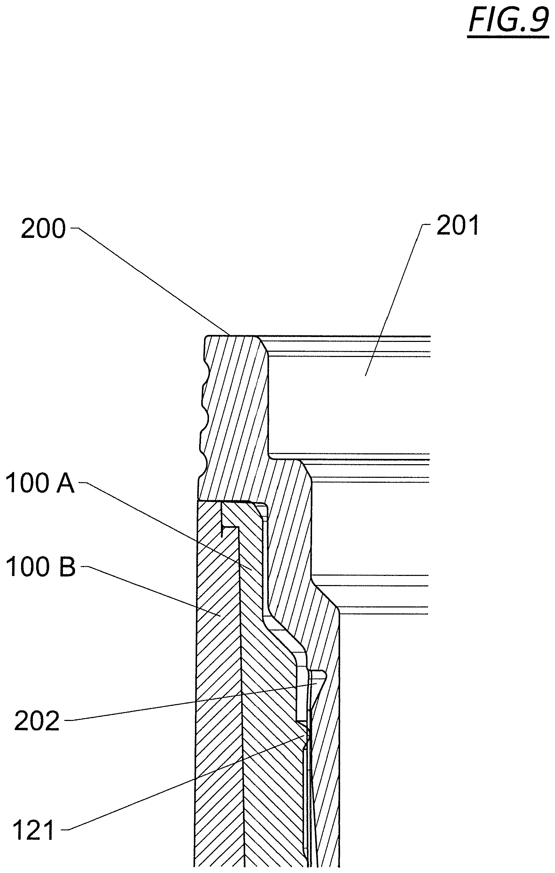

- figure 9 shows a vertical section view of a detail of the upper end of the milk frother in the engagement configuration;

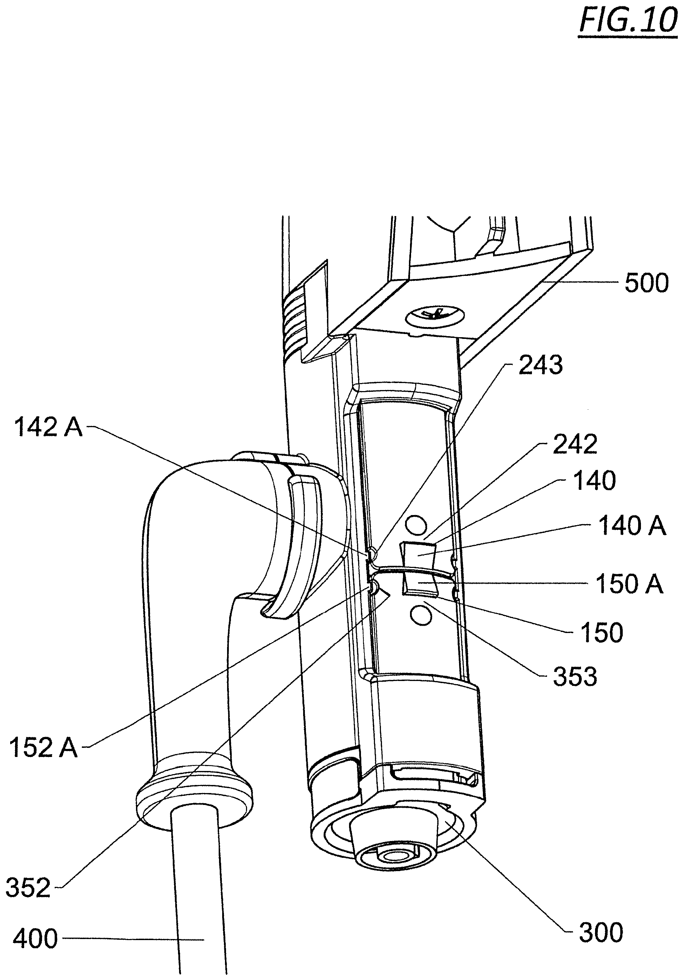

- figure 10 shows the milk frother engaged vertically directly below a steam flow dispenser unit of a coffee machine (indicated only partially for the sake of clarity of the image) and with the milk delivery tube engaged with the milk delivery channel;

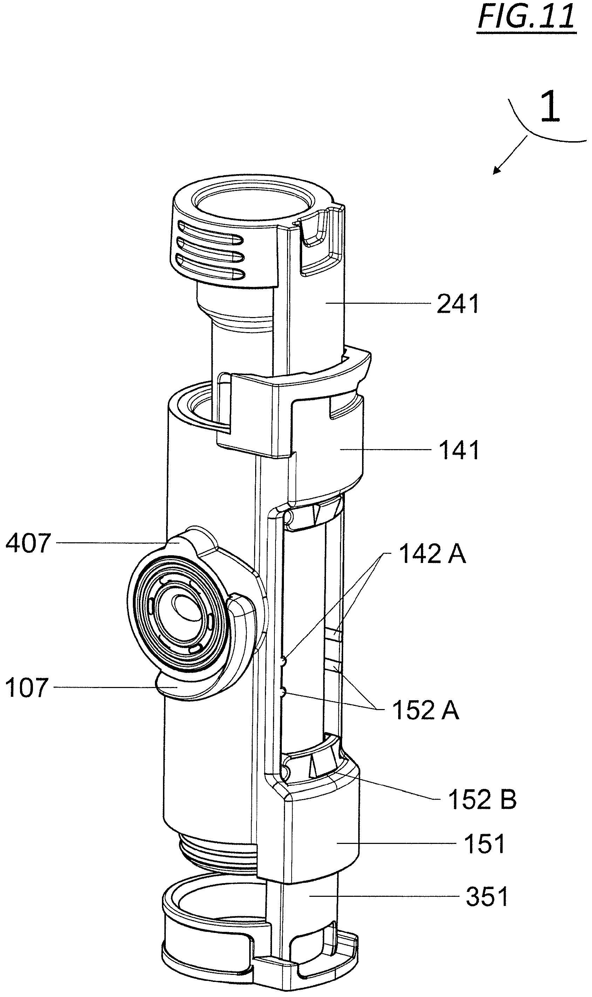

- figure 11 shows the milk frother in the first and second disengagement configuration.

With reference to the cited figures, a milk frother is shown that is generally indicated by number 1.

The milk frother 1 is of the type that is removably connectable to a steam flow dispenser, typically of a coffee machine 500, typically but not necessarily according to a vertical connecting axis.

The milk frother can be anyway connected to a device of another type configured to dispense a flow of steam.

The milk frother 1 comprises a steam fitting 200 associable with the steam flow dispenser of the coffee machine 500, a homogenization element 300 of a flow of frothed milk, a hollow longitudinal body 100 that has an engagement seat 120 of the steam fitting 200, and an engagement seat 130 of the homogenization element 300.

The hollow longitudinal body 100 has a first rubber tubular wall 100 A, for example, but not necessarily silicone rubber, compatible for food use that individually bounds the engagement seat 120 of the steam fitting 200.

The hollow longitudinal body 100 has a second tubular wall made of plastics 100 B that covers externally the first rubber tubular wall 100 A: suitably, the first rubber tubular wall 100 A and the second tubular wall made of plastics 100 B are made by co-moulding, to ensure maximum adhesion and reciprocal sealing thereof.

The hollow longitudinal body 100 that is thus made bounds in cooperation with the steam fitting 200 a steam, air and milk mixing chamber 102, a channel of air inlet 103 to the mixing chamber 102, and a channel of milk access 104 to the mixing chamber 102.

The milk access channel 104 is connected to a milk delivery channel 105 suitably configured inside the hollow longitudinal and connecting body 100 and with a milk supply fitting 106 supported externally by the longitudinal body 100.

The milk delivery channel 105, for reasons of safety that will be explained better below, is tilted downwards from the end adjacent to the milk access channel 104 to the end adjacent to the milk supply fitting 106.

A milk delivery tube 400 is suitably connected to the milk supply fitting 106 by releasable coupling magnetic means.

In one embodiment of the present invention, the milk delivery tube 400 can be provided at the distal end opposite the connection to the milk supply fitting 106 with mechanical stirring means, for example a spoon not shown in the figures.

The steam fitting 200 has a channel of steam access 201 to the mixing chamber 102; the hollow longitudinal body 100 has an outlet channel 110 from the mixing chamber 102 of the flow of frothed milk, which has a dispensing end 111 that engages in the engagement seat 130 with the homogenization element 300.

In practice, the inner cavity of the longitudinal body 100 has a radially widened upper axial portion in which the steam fitting 200 engages, and on the axial extension of the upper axial portion a radially narrowed lower axial portion defining the outlet channel 110 ending with the dispensing end 111.

Opportunely, the air inlet channel 103 is partially formed by a groove 202 that extends on the outer side surface of the steam fitting 200 into a configuration that widens progressively to the opposite ends thereof.

The groove 202 preferably takes on an hour glass configuration that significantly simplifies cleaning the air inlet channel 103.

An inner lip 121 of the engagement seat 120 of the steam fitting 200 rests on the groove 202 at the throat of the latter to bound a minimum passage section of the air inlet channel 103.

The air inlet channel 103 is connected and supplied by an air intake 203 configured as a slot in the surface of a circular crown 204 of the steam fitting 200 abutting operationally with the upper end 112 of the hollow longitudinal body 100.

The homogenization element 300 comprises a baffle 301 having a frontal wall 302 for the interception of the flow of frothed milk and a plurality of holes 303 circumscribing the interception wall 302 for discharging the flow of homogenized frothed milk.

Advantageously, according to the present invention, first permanent connecting means 140 is provided between the hollow longitudinal body 100 and the steam fitting 200.

The first permanent connecting means 140 has a configuration that is variable between a first engagement configuration and a first disengagement configuration between the steam fitting 200 and the engagement seat 120 thereof in the hollow longitudinal body 100.

According to the invention, the first permanent connection means 140 supports the steam fitting 200 slidingly along a longitudinal axis of the hollow longitudinal body 100 between the first engagement configuration and the first disengagement configuration.

The first permanent connecting means 140 comprises a first guide 141 supported by the hollow longitudinal body 100 coupled slidingly with a second guide 241 supported by the steam fitting 200.

The first permanent connecting means 140 further comprises a coupling tooth 140 A that prevents release between the first guide 141 and the second guide 241.

The first guide 141 has abutments 142 A, 142 B selectively engageable with and disengageable from corresponding abutments 242, 243 of the second guide 241 for locking and unlocking the engagement configuration and for locking and unlocking the first disengagement configuration. Each abutment present in the first guide 141 and the corresponding abutment present in the second guide 241 are formed by a recess and a protrusion or vice versa, that are susceptible to reciprocal shape coupling, particularly snap-fit coupling.

In particular, the abutment 142 A is formed by a protrusion and the corresponding abutment 243 is formed by a recess, the abutment 142 B is formed by a protrusion and the corresponding abutment 242 is formed by a recess.

According to the present invention, second permanent connecting means 150 is provided between the hollow longitudinal body 100 and the homogenization element 300.

This second permanent connecting means 150 has a configuration that is variable between a second engagement configuration and a second disengagement configuration between the homogenization element 300 and the dispensing end 111 of the outlet channel 110 in the engagement seat 130 of the hollow longitudinal body 100.

Opportunely, the second permanent connecting means 150 supports the homogenization element 300 slidingly along a longitudinal axis of the hollow longitudinal body 100 between the second engagement configuration and the second disengagement configuration.

The second permanent connection means 150 comprises a third guide 151 supported by the hollow longitudinal body 100 coupled slidingly with a fourth guide 351 supported by the homogenization element 300.

The second permanent connecting means 150 further comprises a coupling tooth 150 A that prevents release between the third guide 151 and the fourth guide 351.

The third guide 151 has abutments 152 A, 152 B that are selectively engageable with and disengageable from corresponding abutments 352, 353 of the fourth guide 351 for locking and unlocking the second engagement configuration and for locking and unlocking the second disengagement configuration.

Each abutment present in the third guide 151 and the corresponding abutment present in the fourth guide 351 are formed by a recess and a protrusion or vice versa, that are susceptible to reciprocal shape coupling, particularly snap-fit coupling.

In particular, the abutment 152 A is formed by a protrusion and the corresponding abutment 352 is formed by a recess, the abutment 152 B is formed by a protrusion and the corresponding abutment 353 is formed by a recess.

In the first engagement configuration of the first permanent connecting means 140 between the steam fitting 200 and the engagement seat 120 thereof in the hollow longitudinal body 100, the first rubber tubular wall 100 A engages in a fluid-tight manner with the steam fitting 200.

In the second engagement configuration between the homogenization element 300 and the dispensing end 111 of the outlet channel 110, the first rubber tubular wall 100 A engages in a fluid-tight manner with the homogenization element 300.

In the first disengagement configuration and respectively in the second disengagement configuration, the first rubber tubular wall 100 A is completely detached and separated from the steam fitting 200 and respectively from the homogenization element 300.

The operation of the milk frother 1 according to the invention is clear from what is described and illustrated and, in particular, is substantially as follows.

In conditions of use, the milk frother 1 has the first permanent connecting means 140 and the second permanent connecting means 150 respectively in the first engagement configuration and in the second engagement configuration: the abutments 142 A and 242 and the abutments 152 A and 352 are engaged reciprocally, the first rubber tubular wall 100 A engages in a fluid tight manner with the steam fitting 200 and with the homogenization element 300.

The milk frother 1 is connected to the steam flow dispenser of the coffee machine 500; the milk delivery tube 400 is connected to the milk supply fitting 106 and the distal end thereof is immersed in a suitable container for the milk, which is not shown in the figures, towards which also the end of the dispenser 111 is oriented.

Operationally, the flow of the steam through the steam access channel 201 creates a Venturi-effect vacuum to the mixing chamber 102 that returns air through the air intake 203, the air inlet channel 103 and the groove 202, and milk through the milk access channel 104 and the milk delivery channel 105.

The flow of frothed milk from the mixing chamber 102 through the outlet channel 110 reaches the dispensing end 111 engaged with the homogenization element 300 and advantageously diffused through the plurality of holes 303.

The milk sucked from the container (not shown in the figures) is re-introduced directly into the container through the plurality of holes 303, and is recirculated until the creamy milk is frothed to the desired level.

For cleaning and washing operations, the milk frother 1 is disengaged from the steam flow dispenser of a coffee machine 500 and from the milk delivery tube 400.

The first permanent connecting means 140 and the second permanent connecting means 150 are brought respectively into the first disengagement configuration and the second disengagement configuration: the abutments 142 B and 242 and the abutments 152 B and 352 are this time engaged reciprocally.

The first rubber tubular wall 100 A of the hollow longitudinal body 100 is completely detached and separated from the steam fitting 200 and from the homogenization element 300.

The steam fitting 200 and the homogenization element 300 remain connected to the hollow longitudinal body 100 respectively by the first permanent connecting means 140 and by the second permanent connecting means 150.

In one preferred embodiment, the magnetic connecting means for connecting the milk delivery tube 400 to the milk supply fitting 106 comprises coaxially facing toroidal magnetic elements. The two toroidal magnetic elements are configured to supply to the two connected parts a stiff connection in the direction of the axis of the magnetic elements but a reciprocal freedom of rotation around the axis of the two magnetic elements.

In order to prevent, in the case of obstruction of the outlet channel 110, of the dispensing end 111 and/or of the homogenization element 300, an accidental rotation of the tube 400 around the axis of the two toroidal magnets being able to cause dispensing of a flow of hot returning fluid upwards towards the user, a protrusion 407 of the milk delivery tube 400 configured to interfere with a cam 107 protruding from the milk supply fitting 106 is supplied.

In practice, during accidental rotation, the protrusion 407 interfering with the cam 107 causes the partial detachment between the two toroidal magnetic elements between which a gap opens from which the flow of hot fluid coming from the milk delivery channel 105 outflows downwards.

It has in fact been established how a milk frother according to the invention is particularly advantageous not only for supplying frothed milk simply and efficiently, but also for simple cleaning and washing operations, also in dishwashers, being able to present itself substantially with three reciprocally constrained but spaced elements for an easier and more complete flow of cleaning liquids into each recess.

The milk frother 1 as conceived herein is susceptible to numerous modifications and variants, as long as they fall into the scope of the appended claims. In practice, the materials used, as well as the dimensions, can be any according to the needs and the state of the art.

## Claims

1. A milk frother (1) comprising a steam fitting (200) that is associable with a steam flow dispenser, a homogenization element (300) of a flow of frothed milk, a hollow longitudinal body (100) having a seat for the engagement (120) of said steam fitting (200) and bounding in cooperation with said steam fitting (200), a steam, air and milk mixing chamber (102), a channel of air access (103) to said mixing chamber (102), and a channel of milk access (104) to said mixing chamber (102), said steam fitting (200) having a channel of steam access (201) to said mixing chamber (102), said hollow longitudinal body (100) further having a channel for the outlet (110) of the flow of frothed milk from said mixing chamber (102), said outlet channel (110) having a dispensing end (111) engaging with said homogenization element (300), first permanent connection means (140) being provided between said hollow longitudinal body (100) and said steam fitting (200), said first permanent connection means (140) having a variable configuration between a first engagement configuration and a first disengagement configuration between said steam fitting (200) and said engagement seat (120) thereof, and second permanent connection means (150) being provided between said hollow longitudinal body (100) and said homogenization element (300), said second permanent connection means (150) having a configuration that is variable between a second engagement configuration and a second disengagement configuration between said homogenization element (300) and said dispensing end (111) of said outlet channel (110), **characterized in that** said first permanent connection means (140) supports said steam fitting (200) slidingly along a longitudinal axis of said longitudinal body (100) between said first engagement configuration and said first disengagement configuration, said first permanent connection means (140) comprising a first guide (141) supported by said hollow longitudinal body (100) coupled slidingly to a second guide (241) supported by said steam fitting (200), said first guide (141) and said second guide (241) having respective abutments (142 A, 142 B, 242, 243) that are reciprocally engageable and disengageable for locking and unlocking said first engagement configuration and for locking and unlocking said first disengagement configuration.

2. The milk frother (1) according to the preceding claim, **characterized in that** said second permanent connecting means (150) supports said homogenization element (300) slidingly along a longitudinal axis of said hollow longitudinal body (100) between said second engagement configuration and said second disengagement configuration.

3. The milk frother (1) according to the preceding claim, **characterized in that** said second permanent connection means (150) comprises a third guide (151) supported by said hollow longitudinal body (100) coupled slidingly to a fourth guide (351) supported by said homogenization element (300).

4. The milk frother (1) according to the preceding claim, **characterized in that** said third guide (151) and said fourth guide (351) have respective abutments (152 A 152 B, 352, 353) reciprocally engageable and disengageable for locking and unlocking said second engagement configuration and for locking and unlocking said second disengagement configuration.

5. The milk frother (1) according to any preceding claim, **characterized in that** said hollow longitudinal body (100) has a first rubber tubular wall (100 A) compatible for food use that singly bounds said engagement seat (120) of said steam fitting (200) and said axially opposite outlet channel (110), and in combination with said steam fitting (200) bounds said mixing chamber (102), said air inlet channel (103) and said milk access channel (104).

6. The milk frother (1) according to the preceding claim, **characterized in that** said hollow longitudinal body (100) has a second tubular wall made of plastics (100 B) that covers externally said first rubber tubular wall (100 A).

7. The milk frother (1) according to any one of claims 5 to 6, **characterized in that** in said first engagement configuration said first rubber tubular wall (100 A) engages in a fluid-tight manner with said steam fitting (200).

8. The milk frother (1) according to any one of claims 5 to 7, **characterized in that** in said second engagement configuration said first rubber tubular wall (100 A) engages in a fluid-tight manner with said homogenization element (300).

9. The milk frother (1) according to any one of claims 5 to 8, **characterized in that** in said first disengagement configuration and respectively in said second disengagement configuration said first rubber tubular wall (100 A) is completely detached and separated from said steam fitting (200) and respectively from said homogenization element (300).

10. The milk frother (1) according to any preceding claim, **characterized in that** said air inlet channel (103) is partially formed by a groove (202) that extends on the outer side surface of said steam fitting (200) into a configuration that widens progressively to the opposite ends thereof.

## Patentansprüche

1. Ein Milchaufschäumer (1), der eine Dampfverbindung (200) umfasst, die mit einem Dampffluss-Spender verbindbar ist, ein Homogenisierungselement (300) für einen Fluss von aufgeschäumter Milch, einen hohlen länglichen Körper (100) mit einer Aufnahme (120) zum Eingriff dieser Dampfverbindung (200) und, in Zusammenarbeit mit dieser Dampfverbindung (200), eine Mischkammer (102) für Dampf, Luft und Milch begrenzt, einen Luftzugangskanal (103) zu dieser Mischkammer (102) und einen Milchzugangskanal (104) zu dieser Mischkammer (102), wobei die Dampfverbindung (200) einen Dampfeintrittskanal (201) zu dieser Mischkammer (102) aufweist, wobei der hohle längliche Körper (100) ferner einen Auslasskanal (110) für den Ausfluss des aufgeschäumten Milchstroms aus der Mischkammer (102) aufweist, wobei dieser Auslasskanal (110) ein Ausgabende (111) hat, das mit dem Homogenisierungselement (300) in Eingriff steht, wobei erste permanente Verbindungsmittel (140) zwischen dem hohlen länglichen Körper (100) und der Dampfverbindung (200) vorgesehen sind, wobei diese ersten permanenten Verbindungsmittel (140) eine veränderliche Konfiguration zwischen einer ersten Eingriffskonfiguration und einer ersten Lösekonfiguration zwischen der Dampfverbindung (200) und ihrer Aufnahmesitz (120) aufweisen,
und zweite permanente Verbindungsmittel (150) zwischen dem hohlen länglichen Körper (100) und dem Homogenisierungselement (300) vorgesehen sind, wobei diese zweiten permanenten Verbindungsmittel (150) eine Konfiguration aufweisen, die zwischen einer zweiten Eingriffskonfiguration und einer zweiten Lösekonfiguration zwischen dem Homogenisierungselement (300) und dem Ausgabende (111) des Auslasskanals (110) veränderlich ist,
**dadurch gekennzeichnet, dass** die ersten permanenten Verbindungsmittel (140) die Dampfverbindung (200) entlang einer Längsachse des länglichen Körpers (100) gleitend zwischen der ersten Eingriffskonfiguration und der ersten Lösekonfiguration unterstützen, wobei die ersten permanenten Verbindungsmittel (140) eine erste Führung (141) umfassen, die von dem hohlen länglichen Körper (100) getragen und gleitend mit einer zweiten Führung (241) gekoppelt ist, die von der Dampfverbindung (200) getragen wird, wobei die erste Führung (141) und die zweite Führung (241) jeweils Anschläge (142 A, 142 B, 242, 243) aufweisen, die wechselseitig ein- und ausrastbar sind, um die erste Eingriffskonfiguration zu verriegeln bzw. zu entriegeln und die erste Lösekonfiguration zu verriegeln bzw. zu entriegeln.

2. Der Milchaufschäumer (1) nach dem vorhergehenden Anspruch, **dadurch gekennzeichnet, dass** die zweiten permanenten Verbindungsmittel (150) das Homogenisierungselement (300) entlang einer Längsachse des hohlen länglichen Körpers (100) gleitend zwischen der zweiten Eingriffskonfiguration und der zweiten Lösekonfiguration unterstützen.

3. Der Milchaufschäumer (1) nach dem vorhergehenden Anspruch, **dadurch gekennzeichnet, dass** die zweiten permanenten Verbindungsmittel (150) eine dritte Führung (151) umfassen, die von dem hohlen länglichen Körper (100) getragen und gleitend mit einer vierten Führung (351) gekoppelt ist, die von dem Homogenisierungselement (300) getragen wird.

4. Der Milchaufschäumer (1) nach dem vorhergehenden Anspruch, **dadurch gekennzeichnet, dass** die dritte Führung (151) und die vierte Führung (351) jeweils Anschläge (152 A, 152 B, 352, 353) aufweisen, die wechselseitig ein- und ausrastbar sind, um die zweite Eingriffskonfiguration zu verriegeln bzw. zu entriegeln und die zweite Lösekonfiguration zu verriegeln bzw. zu entriegeln.

5. Der Milchaufschäumer (1) nach einem der vorhergehenden Ansprüche, **dadurch gekennzeichnet, dass** der hohle längliche Körper (100) eine erste rohrförmige Gummiwand (100 A) aufweist, die für den Lebensmittelgebrauch geeignet ist und allein die Aufnahmesitz (120) der Dampfverbindung (200) sowie den axial gegenüberliegenden Auslasskanal (110) begrenzt und in Kombination mit der Dampfverbindung (200) die Mischkammer (102), den Lufteinlasskanal (103) und den Milcheinlasskanal (104) begrenzt.

6. Der Milchaufschäumer (1) nach dem vorhergehenden Anspruch, **dadurch gekennzeichnet, dass** der hohle längliche Körper (100) eine zweite rohrförmige Wand aus Kunststoff (100 B) aufweist, die die erste rohrförmige Gummiwand (100 A) außen abdeckt.

7. Der Milchaufschäumer (1) nach einem der Ansprüche 5 bis 6, **dadurch gekennzeichnet, dass** in der ersten Eingriffskonfiguration die erste rohrförmige Gummiwand (100 A) fluiddicht mit der Dampfverbindung (200) in Eingriff steht.

8. Der Milchaufschäumer (1) nach einem der Ansprüche 5 bis 7, **dadurch gekennzeichnet, dass** in der zweiten Eingriffskonfiguration die erste rohrförmige Gummiwand (100 A) fluiddicht mit dem Homogenisierungselement (300) in Eingriff steht.

9. Der Milchaufschäumer (1) nach einem der Ansprüche 5 bis 8, **dadurch gekennzeichnet, dass** in der ersten Lösekonfiguration bzw. in der zweiten Lösekonfiguration die erste rohrförmige Gummiwand (100 A) vollständig von der Dampfverbindung (200) bzw. vom Homogenisierungselement (300) gelöst und getrennt ist.

10. Der Milchaufschäumer (1) nach einem der vorhergehenden Ansprüche, **dadurch gekennzeichnet, dass** der Lufteinlasskanal (103) teilweise durch eine Nut (202) gebildet ist, die sich auf der Außenseitenfläche der Dampfverbindung (200) in einer Konfiguration erstreckt, die sich zu deren gegenüberliegenden Enden hin progressiv erweitert.

## Revendications

1. Mousseur à lait (1) comprenant un raccord de vapeur (200) pouvant être associé à un distributeur de flux de vapeur, un élément d'homogénéisation (300) d'un flux de lait moussé, un corps longitudinal creux (100) comportant un logement d'emboîtement (120) pour ledit raccord de vapeur (200) et délimitant, en coopération avec ledit raccord de vapeur (200), une chambre de mélange (102) de vapeur, d'air et de lait, un canal d'accès d'air (103) à ladite chambre de mélange (102) et un canal d'accès de lait (104) à ladite chambre de mélange (102), ledit raccord de vapeur (200) comportant un canal d'accès de vapeur (201) à ladite chambre de mélange (102), ledit corps longitudinal creux (100) comportant en outre un canal de sortie (110) pour l'évacuation du flux de lait moussé depuis ladite chambre de mélange (102), ledit canal de sortie (110) ayant une extrémité de distribution (111) en prise avec ledit élément d'homogénéisation (300),
des premiers moyens de connexion permanente (140) étant prévus entre ledit corps longitudinal creux (100) et ledit raccord de vapeur (200), lesdits premiers moyens de connexion permanente (140) présentant une configuration variable entre une première configuration d'emboîtement et une première configuration de désengagement entre ledit raccord de vapeur (200) et son logement d'emboîtement (120),
et des seconds moyens de connexion permanente (150) étant prévus entre ledit corps longitudinal creux (100) et ledit élément d'homogénéisation (300), lesdits seconds moyens de connexion permanente (150) présentant une configuration variable entre une deuxième configuration d'emboîtement et une deuxième configuration de désengagement entre ledit élément d'homogénéisation (300) et l'extrémité de distribution (111) dudit canal de sortie (110),
**caractérisé en ce que** lesdits premiers moyens de connexion permanente (140) supportent ledit raccord de vapeur (200) de manière coulissante le long d'un axe longitudinal dudit corps longitudinal (100) entre ladite première configuration d'emboîtement et ladite première configuration de désengagement, lesdits premiers moyens de connexion permanente (140) comprenant un premier guide (141) supporté par ledit corps longitudinal creux (100) et accouplé de manière coulissante à un deuxième guide (241) supporté par ledit raccord de vapeur (200), ledit premier guide (141) et ledit deuxième guide (241) comportant des butées respectives (142 A, 142 B, 242, 243) pouvant s'engager et se désengager réciproquement afin de verrouiller et déverrouiller ladite première configuration d'emboîtement et de verrouiller et déverrouiller ladite première configuration de désengagement.

2. Mousseur à lait (1) selon la revendication précédente, **caractérisé en ce que** lesdits seconds moyens de connexion permanente (150) supportent ledit élément d'homogénéisation (300) de manière coulissante le long d'un axe longitudinal dudit corps longitudinal creux (100) entre ladite deuxième configuration d'emboîtement et ladite deuxième configuration de désengagement.

3. Mousseur à lait (1) selon la revendication précédente, **caractérisé en ce que** lesdits seconds moyens de connexion permanente (150) comprennent un troisième guide (151) supporté par ledit corps longitudinal creux (100) et accouplé de manière coulissante à un quatrième guide (351) supporté par ledit élément d'homogénéisation (300).

4. Mousseur à lait (1) selon la revendication précédente, **caractérisé en ce que** ledit troisième guide (151) et ledit quatrième guide (351) comportent des butées respectives (152 A, 152 B, 352, 353) pouvant s'engager et se désengager réciproquement afin de verrouiller et de déverrouiller ladite deuxième configuration d'emboîtement et de verrouiller et de déverrouiller ladite deuxième configuration de désengagement.

5. Mousseur à lait (1) selon l'une quelconque des revendications précédentes, **caractérisé en ce que** ledit corps longitudinal creux (100) comporte une première paroi tubulaire en caoutchouc (100 A) compatible avec un usage alimentaire, délimitant seule ledit logement d'emboîtement (120) du raccord de vapeur (200) et le canal de sortie (110) disposé axialement en position opposée, et délimitant, en combinaison avec ledit raccord de vapeur (200), ladite chambre de mélange (102), le canal d'admission d'air (103) et le canal d'accès du lait (104).

6. Mousseur à lait (1) selon la revendication précédente, **caractérisé en ce que** ledit corps longitudinal creux (100) comporte une deuxième paroi tubulaire en matière plastique (100 B) recouvrant extérieurement ladite première paroi tubulaire en caoutchouc (100 A).

7. Mousseur à lait (1) selon l'une quelconque des revendications 5 à 6, **caractérisé en ce qu'**en ladite première configuration d'emboîtement, ladite première paroi tubulaire en caoutchouc (100 A) est en prise étanche avec ledit raccord de vapeur (200).

8. Mousseur à lait (1) selon l'une quelconque des revendications 5 à 7, **caractérisé en ce qu'**en ladite deuxième configuration d'emboîtement, ladite première paroi tubulaire en caoutchouc (100 A) est en prise étanche avec ledit élément d'homogénéisation (300).

9. Mousseur à lait (1) selon l'une quelconque des revendications 5 à 8, **caractérisé en ce qu'**en ladite première configuration de désengagement et respectivement en ladite deuxième configuration de désengagement, ladite première paroi tubulaire en caoutchouc (100 A) est complètement détachée et séparée respectivement du raccord de vapeur (200) et de l'élément d'homogénéisation (300).

10. Mousseur à lait (1) selon l'une quelconque des revendications précédentes, **caractérisé en ce que** ledit canal d'admission d'air (103) est partiellement formé par une rainure (202) s'étendant sur la surface latérale externe dudit raccord de vapeur (200) selon une configuration s'élargissant progressivement vers ses extrémités opposées.
